Europäisches Patentamt

(19) European Patent Office

Office européen des brevets

(11) Publication number: **0 251 389**
**B1**

(12) **EUROPEAN PATENT SPECIFICATION**

(45) Date of publication of the patent specification:
07.03.90

(21) Application number: **87201166.3**

(22) Date of filing: **17.06.87**

(51) Int. Cl.⁴: **F16L 1/16, E02D 15/10,**
**E02F 3/90, E02F 5/12**

(54) **Apparatus for underwater covering of a line, such as a pipeline and/or other objects, with loose material.**

(30) Priority: **19.06.86 NL 8601596**
**19.06.86 NL 8601597**

(43) Date of publication of application:
**07.01.88 Bulletin 88/1**

(45) Publication of the grant of the patent:
**07.03.90 Bulletin 90/10**

(84) Designated Contracting States:
**BE DE ES FR GB IT NL**

(56) References cited:
**WO-A-80/02169**
**WO-A-83/00060**
**DE-A- 2 822 974**
**DE-B- 1 756 049**
**FR-A- 2 302 390**
**NL-A- 6 607 965**
**NL-A- 8 403 419**
**NL-C- 45 189**
**US-A- 3 828 451**
**US-A- 4 123 860**
**US-A- 4 266 889**

(73) Proprietor: **HOLLANDSCHE BETON GROEP N.V., 489,**
**Generaal Spoorlaan, NL-2285 TA Rijswijk(NL)**

(72) Inventor: **Volbeda, Johan Hendrik, Prinses**
**Margrietlaan 4, NL-2264 TB Leidschendam(NL)**

(74) Representative: **van der Beek, George Frans, Ir. et al,**
**Nederlandsch Octrooibureau Scheveningseweg 82 P.O.**
**Box 29720, NL-2502 LS 's-Gravenhage(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to an apparatus for underwater covering of a line, such as a pipe line laid on the bottom of the water or in a trench of the bottom of the water, with loose bulk material, said apparatus comprising a floating device, a chute which is suspended therefrom and hangs down vertically with its mouth at a distance above the pipe line means for feeding bulk material into the upper end of the chute and means for positioning the mouth of the chute relative to the pipeline.

Such an apparatus is known, for example from DE-A-2 822 974. In this known apparatus the mixture of water and loose material, which is, for example, sucked up from the hold of a ship or is supplied in some other way, is directed at the pipeline to be convered through a pipe hanging down vertically. The lower end ot the chute is vertically adjustable for the purpose of keeping the mouth of the chute at a distance above the pipline to be covered. In addition, said bottom end is adjustable in various directions by means of hauling cables which run upwards at an angle in various directions to the floating apparatus and are connected to winches, in oder to hold the mouth of the chute as well as possible above the pipeline when the floating apparatus is moved by means of its drive elements, operating in the longitudinal and transverse directions along the course of the pipeline.

This floating apparatus is itself affected by the wash of the waves and the current or wind forces. It is therefore difficult with this known apparatus to keep the mouth of the chute in the correct manner above the pipeline. The result of this is that the loose material coming out of the chute is deposited over a wider area than is necessary for covering the pipe. This is partly due to deviations between the course of the pipe to be covered and the actual travel path of the floating apparatus. Since the latter is very bulky, corrections of the travel direction are slow to take place, and they require the longitudinal and transverse screws or other positioning means such as propulsion means based on the Voigt-Schneider principle to be in constant operation. The consequent unavoidable transverse spread of the loose material delays the operation of covering the pipe with loose material and means a loss of loose material because the loose material deposited beside the pipe is not beneficially used for covering of the pipe.

The jet of loose material emerging from the chute has a high velocity, due to the action of the delivery pump forcing the mixture in the chute downwards, and due to the force of gravity. This jet of loose material can damage the pipe to be covered, in particular if the loose material contains coarse-grained material such as gravel and/or stones, which are desirable to give bulk to the covering layer. As a result of the transverse spread, the jet of loose material can also erode the bottom on either side of the pipeline to be covered.

The object of the invention is then to produce an apparatus by means of which it is possible to position accurately the mouth of the chute, despite deviating movements of the floating apparatus, with considerably lower energy consumption and at the same time avoiding damage to the pipe to be covered and erosion of the bottom.

This object is achieved according to the invention in the first place by the fact that the tube is provided at a distance up from the mouth with a horizontal hinge as well as with a second hinge, having its axis perpendicular to that of the first hinge, means being provided for adjusting the angular positions of the parts of the chute on opposite sides of each hinge with respect to each other, which means at each hinge engage the two parts of the chute for angular adjustment with respect to each other, which chute at said distance above the pipeline to be covered has its mouth shaped in a manner such that all the material moving downwardly through the chute is deflected in an essentially horizontal direction. By using two hinges it is possible by means of simple adjusting means, such as hydraulic cylinders, to keep the mouth of the chute during the forward movement of the floating device above the pipe line to be covered. The transverse spread of the loose material then easily can be avoided. It now is sufficient to position the floating device roughly and to carry out the fine adjustments at the lower end of the chute by adjusting the angular positions about the horizontal hinge and about the second hinge. This second hinge can be another horizontal hinge or can be formed by a vertical axis of rotation between two parts of the chute located above the horizontal hinge which vertical axis coincides with the central of the upper part of the chute.

Due to the fact that the lower end of the chute is also provided with means for deflecting the direction of flow of the loose material to a horizontal jet, damage to the pipe to be covered and erosion of the bottom are avoided. The jet is now no longer directed straight at the pipe to be covered, but is diverted in a direction which is at a distance above the pipe to be covered and, after the emergence of the jet from the mouth, a division between the constituents making up the flow of mixture takes place. This thus means that the water of the flow of mixture dissipates into the surrrounding water, while the heavier constituents of the loose material sink to the bottom, and thus onto the pipe to be covered. However, this takes place with less force than in the case of a jet directed straight down.

If the second hinge is a vertical axis of rotation then the additional effect is obtained that positioning of the mouth of the chute easily can take into account that the direction of travel of the floating apparatus can be at an angle with the course of the pipe to be covered which angle can vary under the influence of wind and current. The horizontal hinge then can be used to keep the lower end of the chute above the course of the pipe line whilst the vertical axis of rotation takes care of the angular deviation between the direction of travel and the course of pipeline.

To use as second hinge a vertical axis of rotation is of particular importance in case according to the invention the chute is bent through at least 90° at its lower end or preferably through essentially 100°.

This also holds true if the chute has outlet pipe parts bent into opposite directions. The vertical of rotation permits to adjust the line of discharge in the same direction as the course of the pipeline in case the floating device has its longitudinal axis at an angle to said course of the pipeline. It is, however, possible as well to use as second hinge another horizontal hinge having its axis perpendicular to the axis of the first hinge. By means of such a second horizontal hinge the angle of emergence can be influenced so that slight deviations of the emerging jet relative to the horizontal are possible.

Through the deflection of the flow of mixture and the accurate control facility of the lower end of the chute, better depositing efficiency is achieved with lower energy consumption and the consequence saving in costs. Besides there is no longer any danger of damage to the pipe to be covered, and no erosion of the surrounding area now occurs. The vertical swivel pin of the chute at a point above the horizontal hinge pin(s) can be at any desired point above said pin(s), thus either near the horizontal hinge or near the upper end of the chute or at any desired point between these.

The deflection of the jet can be produced according to the invention in various ways. For example, it is possible to bend the lower end through at least 90 degrees, preferably through essentially 100 degrees. This jet pipe obtained through bending can be directed in the direction of travel, but it can also be directed in the opposite direction.

It is also possible for the chute to have two outlet pipe parts bent in opposite directions, so that loose material can be deposited simultaneously forwards and backwards on the pipe to be covered.

It is also possible to make provision according to the invention for the chute to have at a distance below its lower end an essentially horizontal impact plate, provided with side walls which define the outflow opening directed in the main direction of travel forwards and/or backwards.

This produces a calmer flow of loose material, which flows over the front edge and/or rear edge of the impact plate. According to the invention, said impact plate can have at the outflow opening(s) an overflow edge some distance above the face of the impact plate. An upward component is hereby given to the overflowing mass. The impact plate can also be the bottom of a box connecting with the chute and having one or more outflow openings in said side wall(s), which are transverse to the main direction of travel.

With the apparatus according to the invention it is possible to direct a mixture of water and sand onto the pipe to be covered, just as with the apparatus known from DE-A-2 822 974. In pipelines for the transportation of gas or oil it is desirable to use a covering of sufficient weight, in order to prevent these pipelines from drifting up.

With the apparatus according to the invention, which is characterized in that a jet of loose material emerges from the mouth of the chute, which is directed essentially horizontally, and emerges at a distance above the pipeline to be covered, it is now easier to add coarse-grained material, such as gravel and/or stones, to the mixture of water and loose material. For this coarse-grained material is no longer directed straight at the pipe to be covered, and cannot damage it. In addition, one can now vary the composition of the layer as desired.

Apart from water, the mixture can consist of sand and gravel, sand, gravel and stones, or gravel and stones of varying dimensions.

If the jet is directed downstream, i.e. viewed in the direction of movement sprayed forward, then the heavier parts will land on the pipe to be covered closest to the mouth, and the lighter parts will be carried away further, but will thereby cover the pipe earlier than the heavier parts, so that the latter come to rest on top of the lighter parts.

If the flow from the mouth is directed upstream, i.e. directed backwards, the opposite will take place, and the lighter parts will come to rest on the heavier parts.

If the jet emerges both forwards and backwards, then a combination of these two effects is obtained.

Apart from the avoidance of damage to the pipe to be covered, a filter build-up of the covering layer is thus also obtained.

Moreover, the lighter parts will be spread over a somewhat wider range than the heavier parts, which permits a good transition to the original bottom.

It is pointed out that a pipe projecting under water, having a bent lower end and being capable of pivoting about a horizontal hinge is known per se, for example from DE-A 1 756 049, but it is for a suction line, and not for a deposit pipe, and is not for covering a pipeline.

It is observed that from US-A 3 828 451 a suction tube of a suction dredger is known having three sections which are interconnected with each other by means of universal joints which allow adjustement of the suction tube, in particular of its suction mouth, from one position of dredging towards another position of dredging.

The respective sections of the suction tube are adjustable by means of cables and winches which cables may lift a section, in particular the lower section, and move it to another place.

Due to the fact that the sections of the suction tube are connected with the vessel by means of cables it is not possible to keep the lower end of the tube in a precise position above the bottom of the water. For a suction tube this is not necessary because the mouth is held in contact with the bottom of the water by the suction.

To allow proper positioning of the parts of the chute the means for adjusting said parts with respect to each other interconnect adjustably always the parts on opposite sides of a hinge, so that the parts of the chute are adjusted with respect to each other directly and not with respect to each other as a result of being moved with respect to the vessel, as in the system disclosed by US-A 3 828 451.

It is also pointed out that it is known from NL-A 6 697 965 when passing a pipe, line or cables under a channel, by means of a flushing device conveyed trough the bottom of channel simultaneously with the flushing of the pipe, through a feed pipe bent at right angles to spray a thixotropic medium on the line in the groove.

Here the problems of depositing on a pipeline or the like to be covered do not occur.

The invention will now be explained in greater detail with reference to the drawings.

Fig. 1 shows a side view of a chute according to the invention for use in the process according to the invention.

Fig. 2 is a front view of the apparatus of Fig. 1.

Fig. 3 is a side view of a variant of the apparatus of Figs. 1 and 2.

Fig. 4 shows the position of the apparatus of Figs. 1 and 2 in top view.

Figs. 5 and 6 show in side view variants of the mouth of the chute.

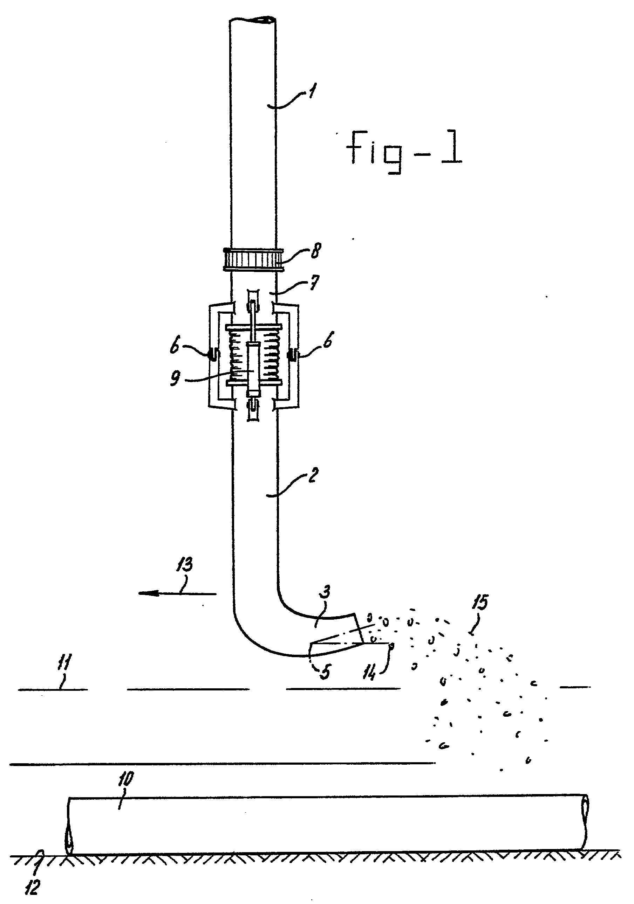

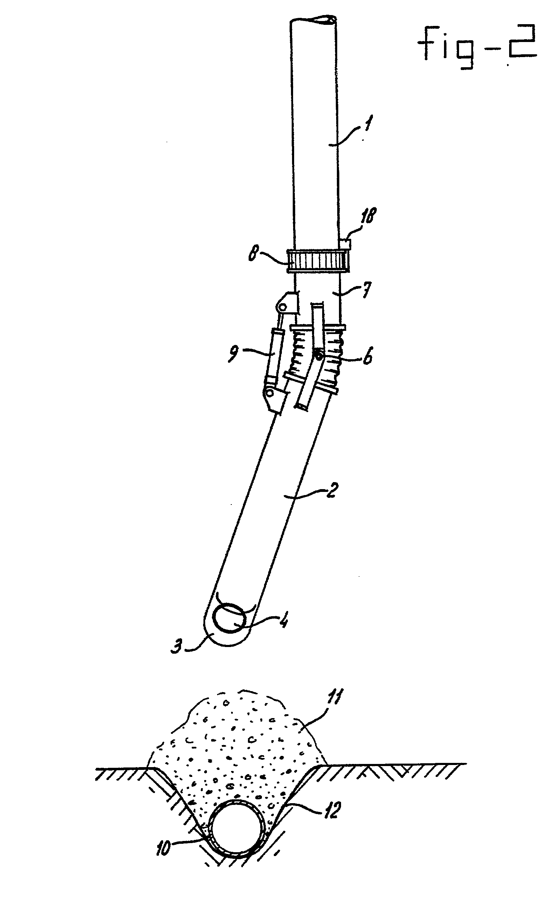

Figs. 1 and 2 show a chute 1 whose upper end (not shown) is suspended from a hopper vessel containing the bulk material, which is transformed with water to a pumpable mixture and fed to the chute 1.

The feed of the bulk material to the chute can take place in any suitable manner, such as in the form of a pumpable mixture, but also by means of a grab or conveyor belt.

The lower part of the chute is formed by a part 2 with an elbow bend type of lower part 3 whose mouth 4 has a central axis 5 which forms an angle of about 10 degrees with the horizontal.

This lower part 2 is fixed by means of a horizontal hinge 6 to a chute part 7 which by means of a slewing ring 8 is rotatably fastened to the chute 1. Between the part 2 and the pipe part 7 is a hydraulic cylinder 9, by means of which the angular position about the horizontal hinge 6 can be set. If the central axis of the chute 1 is not directly above the pipeline 10, the mouth 4 can thus easily be taken precisely above the pipeline 10, by adjusting the angular position by means of the cylinder 9, and applying the covering 11 in such a way that it fills and totally covers the channel 12 containing the pipeline 10.

The direction of movement can be in the direction of the arrow 13 of Fig. 1, but it can also be in the opposite direction. If the movement is in the direction of the arrow 13, the heavier stones 14 will fall first on the pipe 10 and into the channel 12, and the smaller parts 15 will fall on the heavier parts 14.

With movement in the opposite direction the reverse is the case.

As can be seen from Fig. 4, the ship 16 can be forced by wind and current to sail in such a way that the longitudinal axis 17 thereof forms an angle with the course of the pipeline 10.

If only the horizontal hinge 6 were present, this would mean that the mouth of the lower part would not be correctly directed. In order to permit the correct adjustment, provision is made for the slewing ring 8 with drive means 18 (shown only schematically) shown in Figs. 1 and 2. Through turning about the vertical axis of the chute 1 it can be ensured that the direction of outflow from the mouth 4 is always correct.

Instead of the slewing ring 8, it is also possible to use near the horizontal hinge 6 with cylinder 9 a second horizontal hinge 19 with cylinder 20, in which case the axis of the hinge 19 is perpendicular to that of the hinge 6.

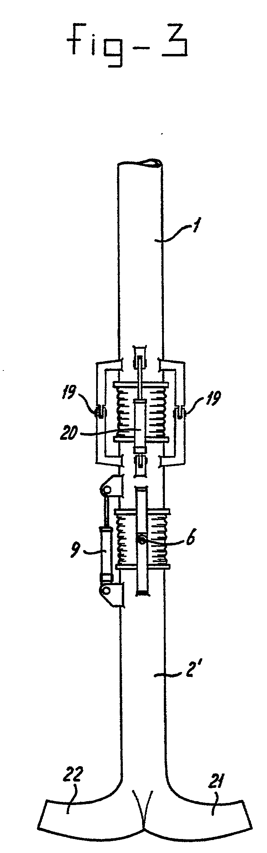

In order to keep the drawing clear, these hinges are shown above one another in Fig. 3. They can, however, lie in the same plane in the manner of a cardan hinge. These two hinges 6 and 19 can be sufficient to compensate for deviations in the position of the ship. A combination with the slewing ring 8 is, however, also conceivable.

Fig. 3 also shows that instead of one elbow-shaped bend, the lower part 2' can be provided with two bends 21 and 22 facing in opposite directions.

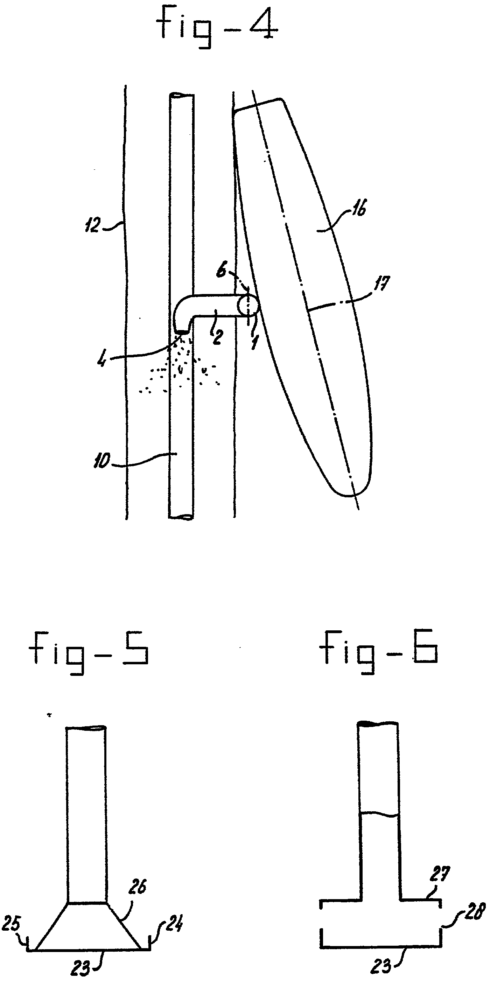

Fig. 5 shows a lower part of the chute where at a distance below the chute an impact plate 23 is fitted with overflow edges 24, 25 and side walls 26. The material coming out of the chute hits the plate 23 and is diverted forwards and/or backwards.

Fig. 6 shows that the impact plate 23 can be the bottom of a box 27 with one or more openings 28 in the side wall.

## Claims

1. Apparatus for underwater covering of a line, such as a pipeline (10) laid on the bottom of the water or in a trench (12) of the bottom of the water, with loose bulk material (11), said apparatus comprising a floating device, a chute (1, 2), which is suspended therefrom and hangs down vertically with its mouth (4, 21, 22, 24, 25, 28) at a distance above the pipe line (19) means for feeding bulk material into the upper end of the chute (1, 2) and means for positioning the mouth of the chute (4–28) relative to the pipe line (10), characterized in that the chute (1, 2) is provided, at a distance up from the mouth (4–28) with a horizontal hinge (6) as well as with a second hinge (8, 19) having its axis perpendicular to that of the first hinge, means being provided for adjusting the angular positions of the parts (2, 7; 1, 7) of the chute (1, 2) on opposite sides of each hinge (6, 8, 19) with respect to each other, which means (9, 18, 20) at each hinge engage the two parts of the chute for angular adjustment with respect to each other, which chute at said distance above the pipeline (10) to be covered has its mouth shaped in a manner such that all the material moving downwardly through the chute is deflected in an essentially horizontal direction.

2. Apparatus as claimed in claim 1, characterized in that, the second hinge is a horizontal hinge (19).

3. Apparatus as claimed in claim 1, characterized in that, the second hinge is a vertical axis of rotation between two parts (1, 7) of the chute located above the horizontal hinge (6), which vertical axis coincides with the central axis of the upper part (1) of the chute.

4. Apparatus as claimed in claim 1, 2 or 3, characterized in that, the chute (2) is bent through at least 90° at its lower end (3).

5. Apparatus as claimed in claim 4, characterized in that, the chute (2) is bent through essentially 100° at its lower end (3).

6. Apparatus as claimed in claim 4 or 5 characterized in that, the chute (2) has outlet pipe parts (21, 22) bent in two opposite directions.

7. Apparatus as claimed in claim 1, 2 or 3, characterized in that, the chute (2) is provided at a distance below its lower end with an essentially horizontal impact plate (23) provided with side walls (24, 25) which define the outflow opening in one or in opposite directions.

8. Apparatus as claimed in claim 7, characterized in that, the impact plate (23) has at the outflow openings an overflow edge (24, 25) some distance above the face of the impact plate (23).

9. Apparatus as claimed in claim 7, characterized in that, the impact plate (23) is the bottom of a box (27) connected with the chute and having one or more outflow openings (28) in the side wall or walls respectively.

## Patentansprüche

1. Vorrichtung zum Abdecken einer Unterwasserleitung, wie einer Förderleitung (10), die auf dem Meeresgrund oder in einem Graben (12) im Meeresgrund verlegt ist, mit losem Schüttgut (11), welche Vorrichtung eine Schwimmeinrichtung, eine Schüttrinne (1, 2), die an dieser hängend angebracht ist und vertikal nach unten derart hängt, daß die Auslauföffnung (4, 21, 22, 24, 25, 28) in einem Abstand über der Förderleitung (19) liegt, eine Einrichtung zur Aufgabe des Schüttgutes im oberen Ende der Schüttrinne (1, 2) und eine Einrichtung zum Positionieren der Auslauföffnung der Schüttrinne (4–28) relativ zu der Förderleitung (10) aufweist, dadurch gekennzeichnet, daß die Schüttrinne (1, 2) in einem Abstand von der Auslauföffnung (4–28) nach oben mit einem horizontalen Gelenk (6), sowie mit einem zweiten Gelenk (8, 19) versehen ist, das eine Achse senkrecht zu jener des ersten Gelenks hat, daß eine Einrichtung zur Einstellung der Winkelpositionen der Teile (2, 7; 1, 7) der Schüttrinne (1, 2) an gegenüberliegenden Seiten des jeweiligen Gelenks (6, 8, 19) in Relation zueinander vorgesehen ist, welche Einrichtung (9, 18, 20) an jedem Gelenk mit den beiden Teilen der Schüttrinne zur Winkeleinstellung bezüglich einander zusammenarbeitet, und daß die Schüttrinne in einem Abstand oberhalb der abzudeckenden Förderleitung (10) mit der Auslauföffnung derart ausgebildet ist, daß alles durch die Schüttrinne nach unten gehendes Gut in eine im wesentlichen horizontale Richtung abgelenkt wird.

2. Vorrichtung nach Anspruch 1, dadurch gekennzeichnet, daß das zweite Gelenk ein horizontales Gelenk (19) ist.

3. Vorrichtung nach Anspruch 1, dadurch gekennzeichnet, daß das zweite Gelenk eine vertikale Drehachse zwischen den beiden Teilen (1, 7) der Schüttrinne aufweist, die oberhalb des horizontalen Gelenks (6) liegt, und daß die vertikale Achse mit der Mittelachse des oberen Teils (1) der Schüttrinne zusammenfällt.

4. Vorrichtung nach Anspruch 1, 2 oder 3, dadurch gekennzeichnet, daß die Schüttrinne (2) um wenigstens 90° an ihrem unteren Ende (3) gebogen ist.

5. Vorrichtung nach Anspruch 4, dadurch gekennzeichnet, daß die Schüttrinne (2) an ihrem unteren Ende (3) um im wesentlichen 100° gebogen ist.

6. Vorrichtung nach Anspruch 4 oder 5, dadurch gekennzeichnet, daß die Schüttrinne (2) Auslaßrohrteile (21, 22) hat, die in Gegenrichtung gebogen sind.

7. Vorrichtung nach Anspruch 1, 2 oder 3, dadurch gekennzeichnet, daß die Schüttrinne (2) in einem Abstand unterhalb ihres unteren Endes mit einer im wesentlichen horizontalen Prallplatte (23) versehen ist, die mit Seitenwänden (24, 25) versehen ist, welche die Auslauföffnung in der einen oder in Gegenrichtung hierzu begrenzen.

8. Vorrichtung nach Anspruch 7, dadurch gekennzeichnet, daß die Prallplatte (23) an den Auslauföffnungen einen Überlaufrand (24, 25) in einem gewissen Abstand oberhalb der Fläche der Prallplatte (23) hat.

9. Vorrichtung nach Anspruch 7, dadurch gekennzeichnet, daß die Prallplatte (23) der Boden eines Kastens (27) ist, der mit der Schüttrinne verbunden ist und ein oder mehrere Auslauföffnungen (28) in der Seitenwand oder in den jeweiligen Wänden hat.

## Revendications

1. Appareil pour recouvrir sous l'eau, avec du matériau meuble en vrac (11), une conduite telle qu'un pipeline (10) posé au fond de l'eau ou dans une tranchée (12) au fond de l'eau, cet appareil comportant un dispositif flottant, une goulotte (1, 2) qui est suspendue depuis ce dispositif et pend verticalement vers le bas, son embouchure (4, 21, 22, 24, 25, 28) étant à une certaine distance au-dessus du pipeline (19), des moyens pour amener du matériau en vrac dans l'extrémité supérieure de la goulotte (1, 2) et des moyens pour positionner l'embouchure de la goulotte (4–28) par rapport au pipeline (10), caractérisé en ce que la goulotte (1, 2) est munie, à une certaine distance au-dessus de l'embouchure (4–28), d'une articulation horizontale (6) ainsi que d'une seconde articulation (8, 19) d'axe perpendiculaire à celui de la première articulation, des moyens étant prévus pour régler les positions angulaires respectives des parties (2, 7; 1, 7) de la goulotte (1, 2) situées de part et d'autre de chaque articulation (6, 8, 19) l'une par rapport à l'autre, ces moyens (9, 18, 20) étant, à chaque articulation, en prise avec les deux parties de la goulotte pour permettre de régler celles-ci l'une par rapport à l'autre, la goulotte ayant à ladite distance au-dessus du pipeline (10) à recouvrir son embouchure confromée de manière à ce que tout le matériau descendant vers le bas à l'intérieur de la goulotte soit dévié dans une direction essentiellement horizontale.

2. Appareil conforme à la revendication 1, caractérisé en ce que la seconde articulation est une articulation horizontale (19).

3. Appareil conforme à la revendication 1, caractérisé en ce que la seconde articulation est un axe de rotation vertical entre deux parties (1, 7) de la goulotte situées au-dessus de l'articulation horizontale (6), cet axe vertical coïncidant avec l'axe central de la partie supérieure (1) de la goulotte.

4. Appareil conforme à l'une des revendication 1, 2 ou 3, caractérisé en ce que la goulotte (2) est recourbée à son extrémité inférieure (3) d'un angle égal à au moins 90°.

5. Appareil conforme à la revendication 4, caractérisé en ce que la goulotte (2) est recourbée à son extrémité inférieure (3) d'un angle essentiellement égal à 100°.

6. Appareil conforme à l'une des revendications 4 ou 5, caractérisé en ce que la goulotte (2) présente des parties de tuyauteries de sortie (21, 22) recourbées dans deux sens opposés.

7. Appareil conforme à l'une des revendications 1, 2 ou 3, caractérisé en ce que la goulotte (2) est munie, à une certaine distance au-dessous de son extrémité inférieure, d'une plaque d'impacat (23) essentiellement horizontale munie de parois latérales (24, 25) qui définissent l'ouverture d'écoulement dans un sens ou dans le sens opposé.

8. Appareil conforme à la revendication 7, caractérisé en ce que la plaque l'impact (23) présente aux ouvertures d'écoulement un bord de débordement (24, 25) à une certaine distance au-dessus de la surface de la plaque d'impact (23).

9. Appareil conforme à la revendication 7, caractérisé en ce que la plaque d'impact (23) est le fond d'une boîte (27) reliée à la goulotte et présentant dans sa ou ses parois latérales respectivement une ou plusieurs ouvertures d'écoulement (28).

fig-1

fig-2

# fig-3

fig-4

fig-5

fig-6